# EUROPEAN PATENT SPECIFICATION

(11) **EP 3 261 181 B1**
(45) Date of publication and mention of the grant of the patent: **02.09.2020**
(21) Application number: 16305748.2
(22) Date of filing: 21.06.2016
(51) Int. Cl.: H01R 4/02, B23K 20/12, B23K 33/00, B23K 9/235, H02G 15/08, B23K 101/38

(54) **CONDUCTOR TRANSITION JOINT DEVICE AND METHOD**
LEITERÜBERGANGSVERBINDUNGSVORRICHTUNG UND VERFAHREN
DISPOSITIF DE JOINT DE TRANSITION DE CONDUCTEUR ET PROCÉDÉ

(43) Date of publication of application: 27.12.2017
(73) Proprietor: Nexans, 92400 Courbevoie (FR)
(72) Inventor: JOHANSSON, Mats, 45290 Strömstad (SE); WILLASSEN, Jorn A., 1784 Halden (NO); DRAMSTAD, Eivind, 1765 Halden (NO)
(74) Representative: Feray, Valérie

(56) References cited:
- WO-A1-2015/135605
- US-B2- 8 695 868

## Description

### FIELD OF THE INVENTION

The present invention relates to power cables, in particular to the joining of power cables.

### BACKGROUND

Power cables comprise one or more cores or conductors, usually disposed within outer layers, for example a layer of insulating material. A number of different metal materials are commonly used for such conductors, including but not limited to copper, aluminum or other materials. It is sometimes necessary or desirable to join together two conductors of dissimilar metal, whether of the same or different diameter, or to join together two conductors of the same material, but of very different diameter.

Traditionally, in the case of conductors of dissimilar material, the two conductors have been joined together using a sleeve or collar enclosing the part of the cable where the two materials meet. Such collars are however stiff or rigid.

It is also known to use a transition joint to connect conductors of dissimilar metal. WO2015135605 and US8695868 both disclose the standard technique known in the industry, namely a method where a transition joint piece is used to connect two conductors of dissimilar metal. The joint piece has a first end made of a first metal (the same metal as the first conductor), and a second end made of a second metal (same as second conductor). The two ends of the joint piece are connected to each other by friction welding. The conductors are conventionally welded to the ends of the joint piece having the same type of metal as its respective conductor. Prior art states that the ends of the joint piece are preferably flat surfaces.

Welding the conductor to the end of the joint piece (in particular with large diameter conductors), will however produce very high temperatures that can heat and degrade the friction weld holding the two sections of the joint piece together. Consequently, the prior art transition joints require elaborate procedures to cool the friction weld and maintain a target temperature during the joining operation. The temperature of the friction weld must be carefully monitored, and if the temperature exceeds the target temperature, the process must be paused until it is again safe to proceed. Such delays are time consuming and add expense to the process, with a high scrap rate from inadequate welds.

For example, when the thickness of a copper conductor exceeds 10 mm, preheating is needed before welding. The recommended temperatures are between 200 - 600 °C. In order not to damage the friction weld, maximum temperature is often set to 225 °C. When preheating, however, the maximum temperature is quickly reached, and the welding operation needs to be interrupted. During welding, the cooling of the friction weld also cools down the copper weld though, which makes it very difficult to reach correct welding temperature, which contributes to a high scrap rate from inadequate welds.

It is also sometimes desirable to join together conductors of the same material, but having different diameter. In the case of large diameter copper conductors in particular this is a challenge due to the high temperatures of the welding process. A joint piece may be useful in this scenario as well.

### SUMMARY OF THE INVENTION

The present invention has as its object to overcome one or more of the disadvantages of the prior art, or at least to provide an alternate transition joint device and method for joining conductors of dissimilar metal, whether of the same or different diameter, or metals of similar material, whether of the same or different diameter, but in particular of different diameter.

According to the invention, as disclosed in claim 1, a transition joint device comprises a first end segment of a first metal and a second end segment of a second metal. As a non-limiting example, the first end segment may be copper and the second end segment can be aluminium. The end segments are preferably cylindrical, with a diameter corresponding to the diameter of the conductors to be joined. The metal of the first end segment of the transition device is of the same material as a first conductor, while the second end segment is of the same material as a second conductor. To produce the joint device of the invention, cylindrical pieces of metal are joined together, for example by friction welding and thereafter machined to the final form of the joint device.

An end portion of the at least one of the end segments of the device is cut in a grid pattern forming a plurality of cordels. The term "cordels" as used herein means a plurality of projections, in the nature of filaments. The cordels are preferably of a corresponding size to the twisted filaments comprising the conductor in the case of a twisted wire conductor. In the case of a solid wire conductor, the end of the conductor may itself be cut into a grid of cordels, corresponding in size to the cordels cut into the end portions of the end segments of the joint device. The cordels are formed by cutting the end portions of the end segments by techniques known in the art, for example using the wire EDM technique. "EDM" or "Electrical Discharge Machining", as used herein refers to a manufacturing process, known in the art, wherein material is removed from a workpiece by a series of rapidly recurring current discharges between an electrode and a workpiece. In "wire EDM", otherwise known as "EDM wire cutting" the electrode is in the form of a wire having a diameter of from 0.1mm to 1.0mm. According to one aspect, the first end segment is copper, while the second end segment, which optionally may or may not bet cut into cordels, is aluminium.

The ends of the conductors are thereafter welded to the end portions of the end segments of the joint device, using welding techniques known in the art, for example TiG welding. "TiG" or "Tungsten Inert Gas" welding as used herein refers to an arc welding process known in the art that uses a non-consumable tungsten electrode to produce the weld. It should be understood however that other welding processes are possible within the scope of the invention.

The air spaces between the individual cordels cause the welding process to form a plurality of small welds between the cordels of the joint device and the filaments or cordels of the conductor. This creates a lower, more controllable temperature profile, avoiding the degradation of the friction weld of the joint device.

According to yet another aspect, the device of the invention provides a supporting collar or "backing" projecting past the ends of one or more of the end segments of the joint device to support the transition zone between the conductor and the joint device during the welding procedure.

According to yet another aspect of the invention, a joint device is provided of a single metal, for example copper, with a first end segment of a first, larger diameter, and an opposite end segment of a second, smaller diameter, with the first end segment tapering to the diameter of the second end segment. In this embodiment, one or both of the end segments of the device have end portions that are cut into a grid of cordels. Such a joint device is particularly useful for jointing twisted copper conductors of different diameter, although it should be understood that both the first and second end segments may alternately be of the same diameter for joining conductors of the same diameter.

### BRIEF DESCRIPTION OF THE DRAWINGS

The invention will now be described in detail, with reference to the attached drawings, wherein:
Figure 1 is an illustration of a prior art transition joint device and method
Figure 2 is a perspective view of an embodiment of the transition joint device of the invention
Figure 3 is a side elevational view of an embodiment of the transition joint device of the invention
Figure 4 is a perspective view of a transition joint device in pre-finished state
Figure 5 is front elevational view of a first end face illustrating an end portion cut in a grid pattern
Figure 6 is a side elevational view of the transition joint device of the invention connected to two conductors
Figure 7 is a photograph of a conductor and transition joint device prior to welding
Figure 8 is a side cut away view of the transition joint device used in connection with a cable having insulation and protective layers
Figure 9 is a photograph of the transition joint device of the invention after welding to two conductors
Figure 10 is a perspective view of an alternate embodiment of the transition joint device of the invention
Figure 11 is a side elevational view of an alternate embodiment of the transition joint device of the invention
Figure 12 is a graph representing a welding operation using a prior art joint device.
Figure 13 is a graph representing a welding operation using a joint device according to the invention.

### DETAILED DESCRIPTION

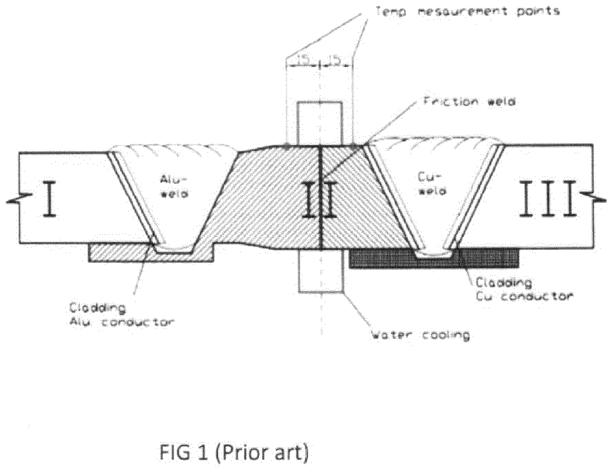

Figure 1 illustrates the prior art. As shown, a conductor I is joined to a conductor III of dissimilar metal. A transition joint device II has two end segments joined at a friction weld. The faces of the conductor and the faces of the segments are machined at an angle to accommodate welds. The conductors and the joint device are held in place by a jig having a water cooling and temperature measuring arrangement about the friction weld. Cladding is introduced at the interface between the welds and the conductors.

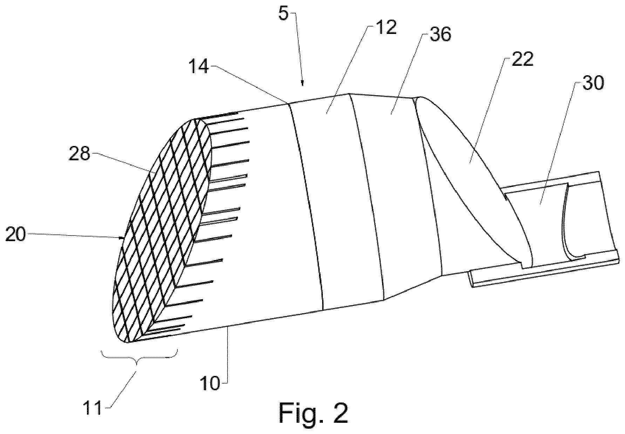

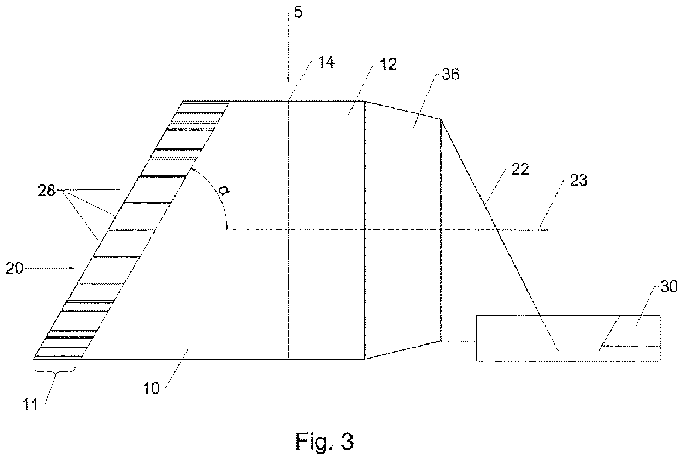

Figures 2 and 3 illustrate an embodiment of the invention useful for joining conductors of dissimilar metal. In the illustrated embodiment the metals are copper and aluminium, however it should be understood that other metals may be employed.

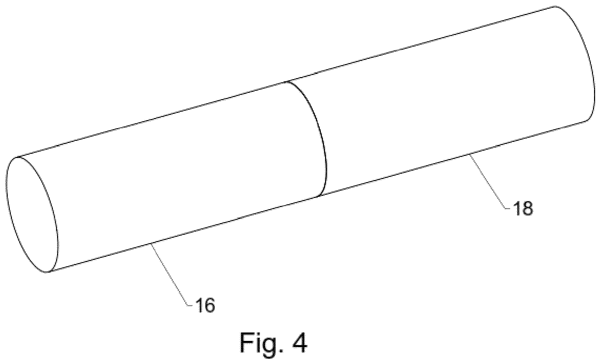

The joint device 5 according to one aspect of the invention comprises a first end segment 10 joined to a second end segment 12. End segment 10 is copper and end segment 12 is aluminium. The two end segments 10,12 are joined at a joint interface 14, preferably in the form of a friction weld. In practice, the joint device 5 shown in Figs 2 and 3 is made by joining together cylindrical pieces of copper 16 and aluminium 18 by friction welding, as conceptually illustrated in Fig 4. The co-joined cylindrical pieces 16,18 are thereafter machined into the final form of the joint device 5, for example to the form shown in Fig 2.

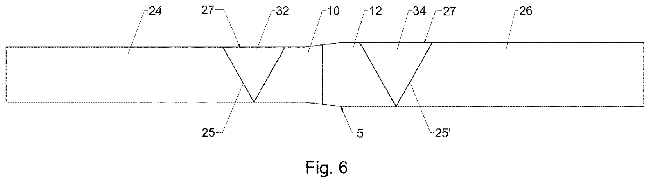

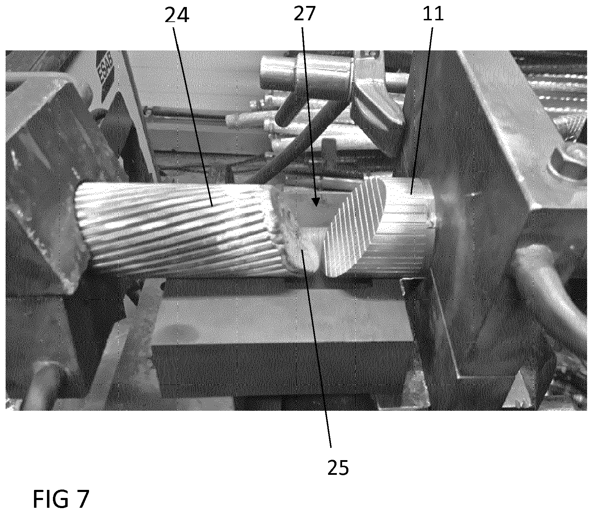

As shown in Figs 2 and 3, the first and second end segments 10,12 have end faces 20 and 22 respectively. The end faces 20,22 are preferably machined at an angle α of from 30 to 40 degrees relative to a longitudinal axis 23 of joint device 5 as shown in Fig 3. A first conductor 24 and a second conductor 26 to be joined are cut so that they have corresponding, but oppositely angled end faces 25 and 25', as shown in Figs 6 and 7. The cooperating angled faces form a V-shaped space 27 between the transition joint device 5 and the cables.

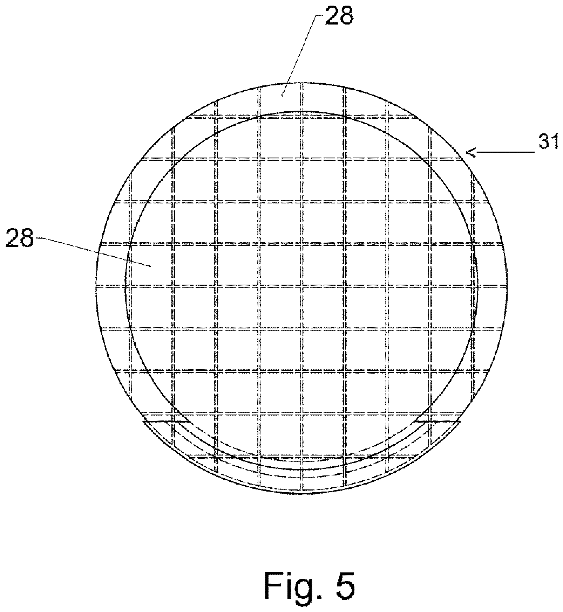

As shown in Figs 2 and 3, end face 20, or optionally both end face 20 and end face 22 terminate an end portion 11, which is cut into a plurality of cordels 28. Cordels 28 are formed by cutting an end portion 11 of end segment 10 (or optionally also an end portion of end segment 12) into a grid pattern 31 as shown in Fig 5. The grid pattern 31 is preferably cut using the wire EDM technique, known in the art. The wire used in the EDM cutting procedure may be from 0.1 to 1.0 mm in diameter. The number of cordels 28 cut into the end portion 11 is dependent upon the diameter of the end segment 10, as well as the diameter of the EDM wire, the diameter of the wire causing the cordels 28 to be spaced apart at a distance equal to the diameter of the wire, represented by the spacing between the lines of the grid 31 in Fig 5. The removal of the material by the wire creates spaces between the cordels. Preferably, the end portions are cut into from 6 to 90 cordels. The thickness of the cordels 28, in the direction transverse to longitudinal axis 23 is preferably from 2 - 10 mm, more preferably from 3-6mm. The cordels 28 are intended to correspond roughly to the dimensions of the individual filaments of a twisted wire conductor. The depth of the cuts, in the direction of longitudinal axis 23, forming the cordels 28 is preferably from 2-20 mm, resulting in cordels 28 having a length of from 2-20mm. Adjacent cordels can be spaced apart from 0.1 to 1mm. The removal of the material in the end portion 11 reduces the surface area of end face 20, referred to herein as "area loss".

As shown in Figs 2 and 3 the transition joint device 5 may also comprise one or more support shoulders 30, known as a "backing" in the welding art. The shoulder or backing 30 supports the conductor and aids in maintaining a proper alignment under the welding operation. According to one aspect, the backing 30 is provided on the aluminium side.

Fig 7 shows a photograph of a copper conductor 24 and end portion 11 of end segment 10 of the joint device 5 prepared for welding. As seen, the angled faces form a V-shaped space 27. The conductor is welded to the joint device 5 by welding techniques known in the art, such as for example TiG welding. The weld produces V-shaped joints 32 and 34 as shown in Fig 6.

Fig. 2 and 3 show a tapered section 36. The taper is a transition between diameters, where the illustrated joint device 5 in Figs 2 and 3 is intended to join a larger diameter copper conductor 24 to end segment 10, and a smaller diameter aluminium conductor 26 to end segment 12. Fig 6 illustrates the alternate situation where the aluminium conductor 26 is of the larger diameter and the copper conductor 24 is of the smaller diameter. In this instance the joint device 5 tapers out to a larger diameter segment 12. It should be understood that end segments 10 and 12 may also be of the same diameter.

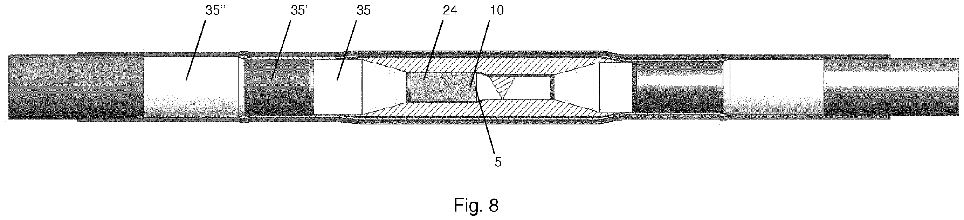

Fig 8 shows the joint device 5 of the invention utilized with a power cable having various protective and/or insulation layers 35, 35' and 35" about conductor 24. The invention is not limited by the type and number of layers about the cable to be joined. Non-limiting examples of such layers include a polyethylene insulation layer 35, a polyethylene insulation screen 35' and a metal shielding 35".

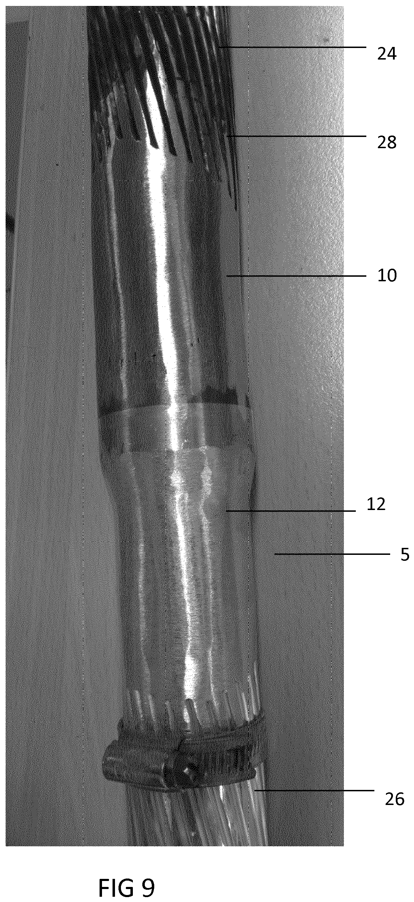

Fig 9 shows the end result whereby cordels 28 of end segment 10 form individual small welds with the filaments of a copper conductor 24. An aluminium conductor 26 is welded to end segment 12 of joint device 5, said end segment 12 in this example not comprising cordels.

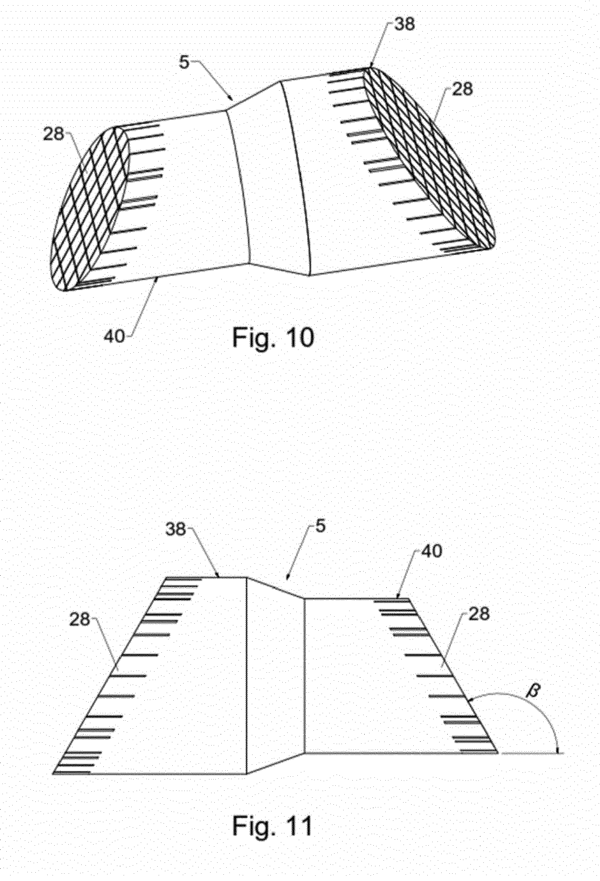

Figs 10 and 11 illustrate an alternate embodiment of the joint device 5 of the invention, useful in joining two conductors of the same metal, where the conductors have different diameters. As shown, a single cylindrical section of metal, for example copper, is machined with a taper from a first, larger diameter end segment 38 to a second, smaller diameter end segment 40. The end faces of both end segments are cut at angles α of from 30 - 40 degrees relative to a line parallel to the longitudinal axis. The illustrated angle β is the complementary angle to the angle α, the angle α is shown on figure 3. End portions 13 are cut into cordels 28 as described above.

### Examples

The following example shows the results of a comparison between a joining operation according to the prior art method of using a transition joint device with flat end surfaces versus a joining operation using the joint device 5 of the present invention.

In the case of the prior art method, cladding is first welded to the end of the conductor. The conductor is then rigged for the welding operation between the conductor and the joint device.

In the case of the technique using the joint device 5 of the invention no cladding is used, as the filaments of the conductor will form individual welds with the cordels. Consequently, no re-rigging is needed. The cordels are cut using the wire EDM process with a cutting wire that is 0.3 mm in diameter, producing cordels of 4 mm thickness.

In the example, the diameter of the end segment 10 of the joint device 5 is 43,7mm, giving a surface area of the end face 20 of the joint device 5 of 1500 mm².

The area loss due to removal of material by the wire cuts forming the cordels is 257 mm², resulting in a post-cut surface area of the end face 20 of the joint device 5 of 1242 mm².

The surface are of the end of the conductor is 1200 mm².

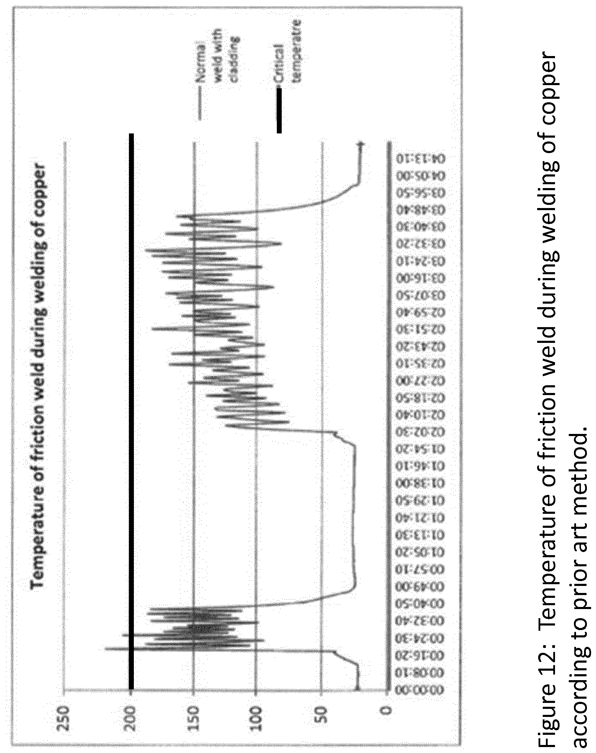

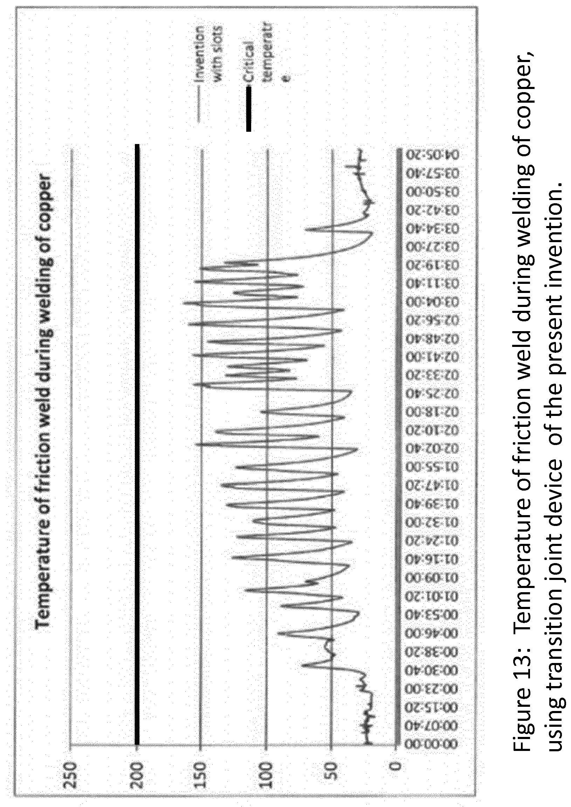

Figure 12 is a graph which represents a welding operation using a prior art joint device while figure 13 is a graph which represents a welding operation using a joint device 5 according to the invention. Temperature in degrees C of the friction weld in the joint device being used is shown in the vertical axis, and time is shown in the horizontal axis in hours:minutes:seconds.

In the example, the weld procedure specification established a maximum allowed temperature of 200-degree C.

In the welding operation represented by figure 13, no cladding operation is required when using the joint device 5 of the invention. Consequently, the period from time stamp 00:00:00 to 04:05:00 in Figure 13 shows only the welding operation between the conductor and the joint device. As can be seen, the maximum allowable termperature is not exceeded and the temperature spikes are significanlty less frequent. The effective time required for the welding operation is reduced in Figure 13 (approx. 03.10.00) compared to Figure 12 (03:50:00).

Experience suggests a scrap rate using the prior art method of 25% or more, while the use of the joint device 5 according to the invention suggests a scrap rate of 10% or less.

## Claims

1. A transition joint device (5) for connecting two conductors (24, 26), comprising a first end segment (10) adapted for welding to a first conductor (24), a second end segment (12) adapted for welding to a second conductor (26), **characterized in that** at least one of the first or second segments (10,12) has an end portion (11), which is cut in a grid pattern forming a plurality of filament shaped projections (28).

2. A transition joint device (5) according to claim 1, **characterized in that** first and second end segments (10,12) are longitudinally arranged along a longitudinal axis (23), and wherein the filament shaped projections (28) comprise projections in the longitudinal direction arranged in a grid pattern (31) in an end face (20) of the joint device (5).

3. A transition joint device (5) according to either of claims 1 or 2, **characterized in that** filament shaped projections (28) have a thickness in the direction transverse to longitudinal axis (23) of from 2-10mm and a length of from 2-20mm.

4. A transition joint device (5) according to one of the preceding claims, **characterized in that** adjacent filament shaped projections (28) are spaced apart at a distance in the direction transverse to longitudinal axis (23) of from 0.1 to 1.0mm.

5. A transition joint device (5) according to one of the preceding claims, **characterized in that** the filament shaped projections (28) are formed by a plurality of longitudinal cuts in end portion (11).

6. A transition joint device (5) according to one of the preceding claims, **characterized in that** the end portion (11) comprises from 6 to 90 filament shaped projections (28).

7. A transition joint device (5) according to one of the preceding claims, **characterized in that** the first end segment (10) is made of a first metal material and the second end segment (12) is made of a second, different metal material, said first and second end segments (10,12) being joined together at a joint interface (14).

8. A transition joint device (5) according to claim 7, **characterized in that** joint interface (14) is a friction weld.

9. A transition joint device (5) according to claim 7, **characterized in that** the first metal material is copper and the second metal material is aluminium.

10. A transition joint device (5) according to one of the preceding claims, **characterized in that** at least one of end segments (10,12) further comprises a should member (30) adapted to support the respective conductor.

11. A transition joint device (5) according to one of the preceding claims, **characterized in that** the first and second end segments (10,12) have end faces (20,22) arranged at an angle α of from 30 to 40 degrees relative to longitudinal axis (23).

12. A transition joint device (5) according to one of the preceding claims, **characterized in that** the first end segment (10) is essentially cylindrical, having a first diameter, and the second end segment (12) is essentially cylindrical, having a second, different diameter.

13. A transition joint device (5) according to one of the preceding claims, **characterized in that** the joint device (5) is formed by machining two cylindrical metal pieces (16,18) joined by friction welding.

14. A transition joint device (5) according to one of the preceding claims, **characterized in that** the first and second end segments (10,12) are of the same metal material.

15. A method of forming an end portion of a transition joint device (5) according to claim 5, wherein the filament shaped projections (28) are formed by cutting an end portion (11) in the longitudinal direction using the wire EDM process.

16. A method for joining cables, **characterized in** the steps of:
a. Providing a transition joint device (5) according to one of claims 1-14,
b. Arranging two conductors (24,26), end to end with the end segments (10,12) of the transition joint device (5), at least a first of said conductors (24) being of the twisted wire type, said first conductor (24) of the twisted wire type being arranged opposite an end portion (11) comprising filament shaped projections (28),
c. Welding the ends of the conductors (24,26) to the end segments (10,12) of the transition joint device (5)
d. Whereby the welding forms a plurality of individual small welds between the wires comprising the first conductor (24) and the filament shaped projections (28).

17. The method according to claim 16, wherein a first conductor (24) is made of copper, and a second conductor (26) is made of aluminium.

## Patentansprüche

1. Übertragungsverbindungsvorrichtung (5) zur Verbindung von zwei Leitern (24, 26), umfassend ein erstes Endsegment (10), das ausgelegt ist, um einen ersten Leiter (24) zu schweißen, ein zweites Endsegment (12), das ausgelegt ist, um einen zweiten Leiter (26) zu schweißen, **dadurch gekennzeichnet dass** mindestens eines des ersten oder zweiten Segments (10, 12) einen Endabschnitt (11) aufweist, der in einem Gittermuster geschnitten ist, das eine Vielzahl von fadenförmigen Vorsprüngen (28) bildet.

2. Übertragungsverbindungsvorrichtung (5) nach Anspruch 1, **dadurch gekennzeichnet, dass** erste und zweite Endsegmente (10, 12) der Länge nach entlang einer Längsachse (23) angeordnet sind, und wobei die fadenförmigen Vorsprünge (28) Vorsprünge in der Längsrichtung umfassen, die in einem Gittermuster (31) in einer Endseite (20) der Verbindungsvorrichtung (5) angeordnet sind.

3. Übertragungsverbindungsvorrichtung (5) nach einem von Anspruch 1 oder 2, **dadurch gekennzeichnet, dass** die fadenförmigen Vorsprünge (28) eine Dicke in der Querrichtung zur Längsachse (23) von 2 - 10 mm und eine Länge von 2 - 20 mm aufweisen.

4. Übertragungsverbindungsvorrichtung (5) nach einem der vorhergehenden Ansprüche, **dadurch gekennzeichnet, dass** benachbarte fadenförmigen Vorsprünge (28) mit einem Abstand in der Querrichtung zur Längsachse (23) von 0,1 bis 1,0 mm beabstandet sind.

5. Übertragungsverbindungsvorrichtung (5) nach einem der vorhergehenden Ansprüche, **dadurch gekennzeichnet, dass** die fadenförmigen Vorsprünge (28) durch eine Vielzahl von Längsschnitten im Endabschnitt (11) gebildet sind.

6. Übertragungsverbindungsvorrichtung (5) nach einem der vorhergehenden Ansprüche, **dadurch gekennzeichnet, dass** der Endabschnitt (11) von 6 bis 90 fadenförmige Vorsprünge (28) umfasst.

7. Übertragungsverbindungsvorrichtung (5) nach einem der vorhergehenden Ansprüche, **dadurch gekennzeichnet, dass** das erste Endsegment (10) aus einem ersten Metallmaterial hergestellt ist und das zweite Endsegment (12) aus einem zweiten, verschiedenen Metallmaterial hergestellt ist, wobei das erste und zweite Endsegment (10, 12) an einer Verbindungsschnittstelle (14) miteinander verbunden sind.

8. Übertragungsverbindungsvorrichtung (5) nach Anspruch 7, **dadurch gekennzeichnet, dass** die Verbindungsschnittstelle (14) eine Reibungsschweißung ist.

9. Übertragungsverbindungsvorrichtung (5) nach Anspruch 7, **dadurch gekennzeichnet, dass** das erste Metallmaterial Kupfer ist und das zweite Metallmaterial Aluminium ist.

10. Übertragungsverbindungsvorrichtung (5) nach einem der vorhergehenden Ansprüche, **dadurch gekennzeichnet, dass** mindestens eines der Endsegmente (10, 12) weiter ein Schulterelement (30) umfasst, das ausgelegt ist, um den entsprechenden Leiter zu stützen.

11. Übertragungsverbindungsvorrichtung (5) nach einem der vorhergehenden Ansprüche, **dadurch gekennzeichnet, dass** das erste und zweite Endsegment (10, 12) Endseiten (20, 22) aufweisen, die in einem Winkel α von 30 bis 40 Grad mit Bezug auf die Längsachse (23) angeordnet sind.

12. Übertragungsverbindungsvorrichtung (5) nach einem der vorhergehenden Ansprüche, **dadurch gekennzeichnet, dass** das erste Endsegment (10) im Wesentlichen zylindrisch ist, aufweisend einen ersten Durchmesser, und das zweite Endsegment (12) im Wesentlichen zylindrisch ist, aufweisend einen zweiten, verschiedenen Durchmesser.

13. Übertragungsverbindungsvorrichtung (5) nach einem der vorhergehenden Ansprüche, **dadurch gekennzeichnet, dass** die Verbindungsvorrichtung (5) durch die Bearbeitung von zwei zylindrischen Metallteilen (16, 18) gebildet ist, die durch Reibungsschweißung verbunden sind.

14. Übertragungsverbindungsvorrichtung (5) nach einem der vorhergehenden Ansprüche, **dadurch gekennzeichnet, dass** das erste und zweite Endsegment (10, 12) aus dem gleichen Metallmaterial sind.

15. Verfahren zum Bilden eines Endabschnitts einer Übergangsverbindungsvorrichtung (5) nach Anspruch 5, wobei die fadenförmigen Vorsprünge (28) durch Schneiden eines Endabschnitts (11) in der Längsrichtung unter Verwendung des Drahterodierprozesses gebildet werden.

16. Verfahren zur Verbindung von Kabeln, **gekennzeichnet durch** die folgenden Schritte:
a. Bereitstellen einer Übergangsverbindungsvorrichtung (5) nach einem der Ansprüche 1 - 14,
b. Anordnen von zwei Leitern (24, 26) Ende an Ende mit den Endsegmenten (10, 12) der Übertragungsverbindungsvorrichtung (5), wobei mindestens ein erster der Leiter (24) der verdrillten Drahtart ist, wobei der erste Leiter (24) der verdrillten Drahtart gegenüber einem Endabschnitt (11) angeordnet ist, der fadenförmige Vorsprünge (28) umfasst,
c. Schweißen der Enden der Leiter (24, 26) an die Endsegmente (10, 12) der Übertragungsverbindungsvorrichtung (5)
d. wobei die Schweißung eine Vielzahl von individuellen kleinen Schweißnähten zwischen den Drähten, die den ersten Leiter (24) umfassen, und den fadenförmigen Vorsprüngen (28) bildet.

17. Verfahren nach Anspruch 16, wobei der erste Leiter (24) aus Kupfer hergestellt ist und ein zweiter Leiter (26) aus Aluminium hergestellt ist.

## Revendications

1. Dispositif de joint de transition (5) pour raccorder deux conducteurs (24, 26) comprenant un premier segment d'extrémité (10) adapté pour le soudage sur un premier conducteur (24), un second segment d'extrémité (12) adapté pour le soudage sur un second conducteur (26), **caractérisé en ce qu'**au moins l'un parmi les premier ou second segments (10, 12) a une partie d'extrémité (11) qui est coupée selon un motif de grille formant une pluralité de saillies en forme de filament (28).

2. Dispositif de joint de transition (5) selon la revendication 1, **caractérisé en ce que** les premier et second segments d'extrémité (10, 12) sont agencés longitudinalement le long d'un axe longitudinal (23), et dans lequel les saillies en forme de filament (28) comprennent des saillies dans la direction longitudinale agencées dans un modèle de grille (31) dans une face d'extrémité (20) du dispositif de joint (5).

3. Dispositif de joint de transition (5) selon les revendications 1 ou 2, **caractérisé en ce que** les saillies en forme de filament (28) ont une épaisseur dans la direction transversale par rapport à l'axe longitudinal (23) de 2 à 10 mm et une longueur de 2 à 20 mm.

4. Dispositif de joint de transition (5) selon l'une des revendications précédentes, **caractérisé en ce que** les saillies en forme de filament (28) adjacentes sont espacées à une distance dans la direction transversale par rapport à l'axe longitudinal (23) de 0,1 à 1,0 mm.

5. Dispositif de joint de transition (5) selon l'une des revendications précédentes, **caractérisé en ce que** les saillies en forme de filament (28) sont formées par une pluralité de découpes longitudinales dans la partie d'extrémité (11).

6. Dispositif de joint de transition (5) selon l'une des revendications précédentes, **caractérisé en ce que** la partie d'extrémité (11) comprend de 6 à 90 saillies en forme de filament (28).

7. Dispositif de joint de transition (5) selon l'une des revendications précédentes, **caractérisé en ce que** le premier segment d'extrémité (10) est réalisé avec un premier matériau métallique et le second segment d'extrémité (12) est réalisé avec un second matériau métallique différent, lesdits premier et second segments d'extrémité (10, 12) étant assemblés au niveau d'une interface de joint (14).

8. Dispositif de joint de transition (5) selon la revendication 7, **caractérisé en ce que** l'interface de joint (14) est une soudure par friction.

9. Dispositif de joint de transition (5) selon la revendication 7, **caractérisé en ce que** le premier matériau métallique est du cuivre et le second matériau métallique est de l'aluminium.

10. Dispositif de joint de transition (5) selon l'une des revendications précédentes, **caractérisé en ce qu'**au moins l'un des segments d'extrémité (10, 12) comprend en outre un élément d'épaulement (30) adapté pour supporter le conducteur respectif.

11. Dispositif de joint de transition (5) selon l'une des revendications précédentes, **caractérisé en ce que** les premier et second segments d'extrémité (10, 12) ont des faces d'extrémité (20, 22) agencées à un angle α de 30 à 40 degrés par rapport à l'axe longitudinal (23).

12. Dispositif de joint de transition (5) selon l'une des revendications précédentes, **caractérisé en ce que** le premier segment d'extrémité (10) est essentiellement cylindrique, ayant un premier diamètre, et le second segment d'extrémité (12) est essentiellement cylindrique, ayant un second diamètre différent.

13. Dispositif de joint de transition (5) selon l'une des revendications précédentes, **caractérisé en ce que** le dispositif de joint (5) est formé en usinant deux pièces de métal cylindriques (16, 18) assemblées par soudage par friction.

14. Dispositif de joint de transition (5) selon l'une des revendications précédentes, **caractérisé en ce que** les premier et second segments d'extrémité (10, 12) sont réalisés avec le même matériau métallique.

15. Procédé pour former une partie d'extrémité d'un dispositif de joint de transition (5) selon la revendication 5, dans lequel les saillies en forme de filament (28) sont formées en découpant une partie d'extrémité (11) dans la direction longitudinale en utilisant un procédé d'usinage par électroérosion à fil.

16. Procédé pour assembler des câbles, **caractérisé par** les étapes consistant à :
a. prévoir un dispositif de joint de transition (5) selon l'une des revendication 1 à 14,
b. agencer deux conducteurs (24, 26), bout à bout avec les segments d'extrémité (10, 12) du dispositif de joint de transition (5), au moins un premier desdits conducteurs (24) étant du type à fil torsadé, ledit premier conducteur (24) du type à fil torsadé étant agencé à l'opposé d'une partie d'extrémité (11) comprenant des saillies en forme de filament (28),
c. souder les extrémités des conducteurs (24, 26) aux segments d'extrémité (10, 12) du dispositif de joint de transition (5),
d. moyennant quoi le soudage forme une pluralité de petites soudures individuelles entre les fils comprenant le premier conducteur (24) et les saillies en forme de filament (28).

17. Procédé selon la revendication 16, dans lequel un premier conducteur (24) est réalisé à partir de cuivre, et un second conducteur (26) est réalisé à partir d'aluminium.
